(19) Europäisches Patentamt
European Patent Office
Office européen des brevets

(11) **EP 3 789 228 B1**

(12) **EUROPEAN PATENT SPECIFICATION**

(45) Date of publication and mention
of the grant of the patent:
**28.07.2021 Bulletin 2021/30**

(51) Int Cl.:
**B60K 35/00** *(2006.01)*    **G02B 27/00** *(2006.01)*

(21) Application number: **20191727.5**

(22) Date of filing: **19.08.2020**

(54) **VEHICULAR DISPLAY DEVICE**

FAHRZEUGANZEIGEVORRICHTUNG

AFFICHEUR POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2019 JP 2019161913**

(43) Date of publication of application:
**10.03.2021 Bulletin 2021/10**

(73) Proprietor: **YAZAKI CORPORATION**
**Minato-ku,**
**Tokyo 108-8333 (JP)**

(72) Inventors:
• **OGISU, Takuma**
**Susono-shi, Shizuoka 410-1194 (JP)**
• **AOKI, Kunimitsu**
**Susono-shi, Shizuoka 410-1194 (JP)**

(74) Representative: **Grünecker Patent- und**
**Rechtsanwälte**
**PartG mbB**
**Leopoldstraße 4**
**80802 München (DE)**

(56) References cited:
**JP-A- H07 230 059**    **JP-A- 2011 227 281**
**US-A- 5 053 755**

## Description

BACKGROUND OF THE INVENTION

1. Field of the Invention

The present invention relates to a vehicular display device.

2. Description of the Related Art

In the related art, there is a display device using a hologram. Japanese Patent Application Laid-open No. 11-91401 discloses a vehicular holographic display device including an information display source that generates information to be displayed as light, and a combiner having a hologram that is arranged in a dark color concealing part provided on a peripheral edge part of a windshield of a vehicle, diffracts light toward an observer, and displays the light as a virtual image.

When the hologram is disposed inside the windshield, it is necessary to consider the reflection of the display light by the surface of the windshield. From the standpoint of improving the visibility of the display image, it is preferable to dispose a projection device such that reflected light is directed in a direction different from the eye range. However, since there is a mounting position limitation in the vehicle, it is not always possible to dispose the projection device at a desired position. JP2011227281A discloses a vehicular display device comprising a reflection-type hologram.

SUMMARY OF THE INVENTION

An object of the present invention is to provide a vehicular display device capable of improving the visibility of a display image and improving the degree of freedom in the arrangement of a projection device.

A vehicular display device according to one aspect of the present invention includes a reflection-type hologram disposed inside a windshield of a vehicle and including a first surface facing a side of an eye range of the vehicle; and a projection device that projects display light of a P wave toward the first surface, wherein the hologram outputs the display light, which is incident on the first surface from the projection device, as diffracted light directed to the eye range, and has diffraction characteristics of condensing the diffracted light in the eye range, the projection device is disposed such that a part of the display light is reflected toward the eye range when an incident angle of the display light on the windshield is within a predetermined angle range, and the projection device is disposed such that an angle difference between an incident angle included in the predetermined angle range and a Brewster angle is equal to or less a predetermined value.

According to another aspect of the present invention, in the vehicular display device, it is preferable that the projection device is disposed such that the predetermined angle range includes the Brewster angle.

According to still another aspect of the present invention, in the vehicular display device, it is preferable that the projection device is disposed such that a brightness ratio between brightness of reflected light reflected by the windshield toward the eye range and brightness of the diffracted light is equal to or less than a predetermined value.

According to still another aspect of the present invention, in the vehicular display device, it is preferable that the brightness of the reflected light includes brightness of light reflected by a surface of the windshield on a vehicle interior side and brightness of light reflected by a boundary surface between the windshield and an outside of the vehicle after passing through the surface on the vehicle interior side.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a schematic configuration diagram of a vehicular display device according to an embodiment;
FIG. 2 is a diagram explaining the diffraction of light by a hologram according to the embodiment;
FIG. 3 is a diagram explaining light reflected by a windshield;
FIG. 4 is a diagram explaining first reflected light and second reflected light of the embodiment;
FIG. 5 is a diagram illustrating reflection characteristics in the windshield of the embodiment; and
FIG. 6 is a diagram explaining a method for determining the arrangement of a projection device according to the embodiment.

DETAILED DESCRIPTION OF THE PREFERRED EMBODIMENTS

Hereinafter, a vehicular display device according to an embodiment of the present invention will be described in detail with reference to the drawings.

Embodiment

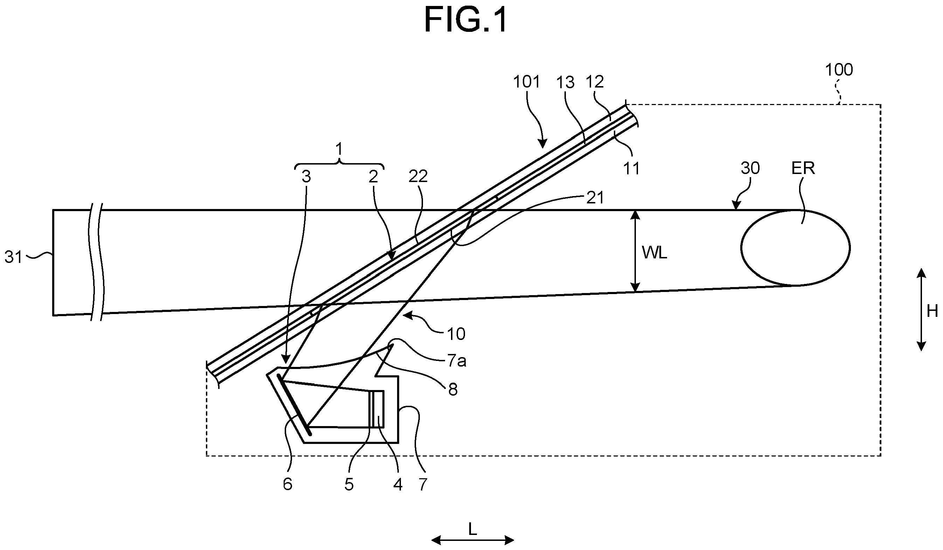

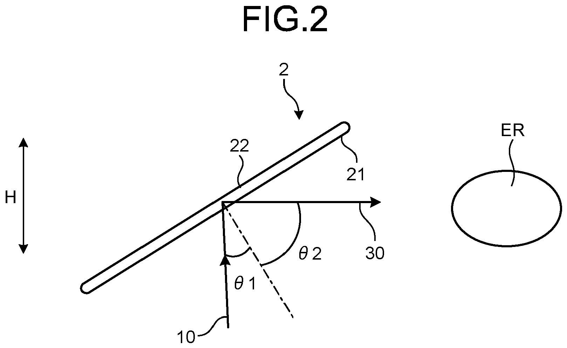

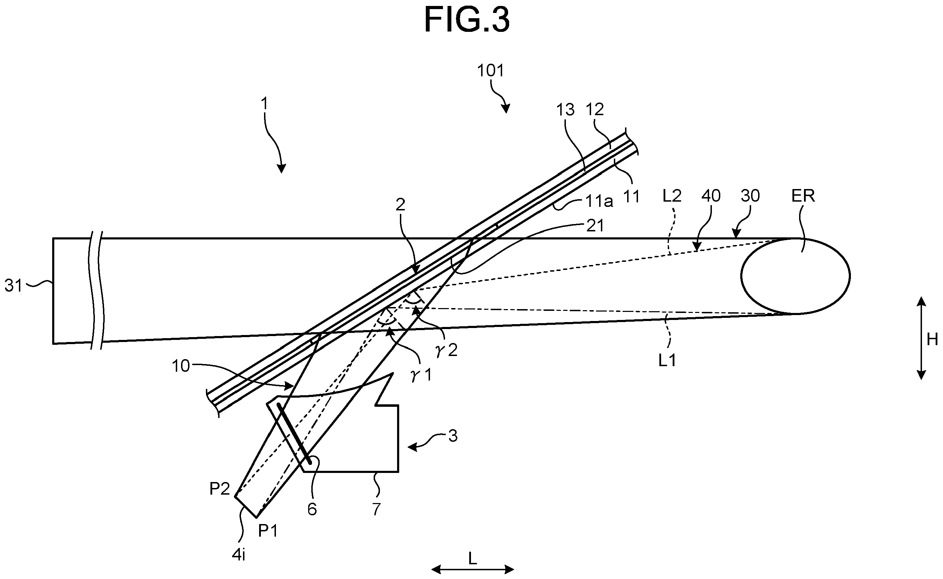

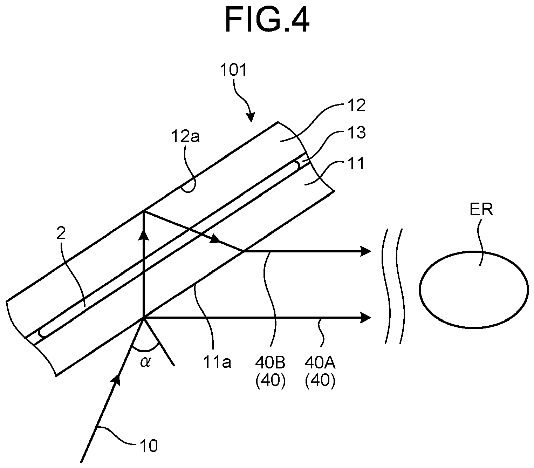

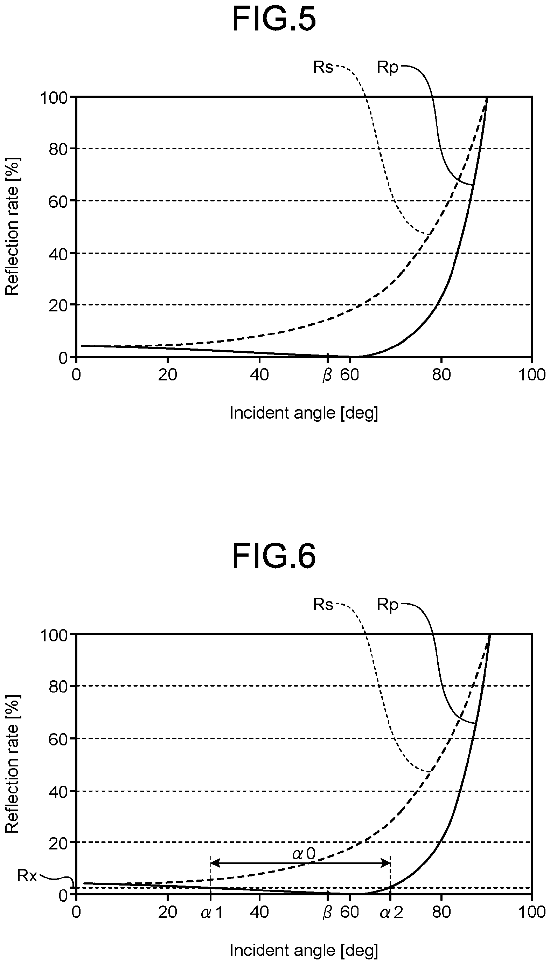

With reference to FIG. 1 to FIG. 6, the embodiment will be described. The present embodiment relates to a vehicular display device. FIG. 1 is a schematic configuration diagram of a vehicular display device according to an embodiment; FIG. 2 is a diagram explaining the diffraction of light by a hologram according to the embodiment; FIG. 3 is a diagram explaining light reflected by a windshield; FIG. 4 is a diagram explaining first reflected light and second reflected light of the embodiment; FIG. 5 is a diagram illustrating reflection characteristics in the windshield of the embodiment; and FIG. 6 is a diagram explaining a method for determining the arrangement of a projection device according to the embodiment.

As illustrated in FIG. 1, a vehicular display device 1 of the present embodiment is a head-up display device mounted on a vehicle 100 such as an automobile. The vehicular display device 1 has a hologram 2 and a projection device 3. The hologram 2 is disposed inside a windshield 101 of the vehicle 100. The windshield 101 is a laminated glass and has an inner glass 11, an outer glass 12, and an intermediate film 13. The intermediate film 13 and the hologram 2 are sealed between the inner glass 11 and the outer glass 12. The intermediate film 13 is made of a synthetic resin such as polymer. The hologram 2 may be integrally formed with the intermediate film 13 or may be inserted into the intermediate film 13, for example.

The hologram 2 is a transparent film processed to have desired diffraction characteristics. The hologram 2 of the present embodiment is a reflection-type hologram. The hologram 2 has a first surface 21 and a second surface 22. The hologram 2 diffracts light incident on the first surface 21 and emits the diffracted light from the first surface 21.

As illustrated in FIG. 2, when light is incident on the first surface 21 at a first angle $\theta1$, the hologram 2 outputs diffracted light 30 from the first surface 21. The hologram 2 is formed such that the emission angle of the diffracted light 30 is a second angle $\theta2$. The second angle $\theta2$ is determined such that the diffracted light 30 is directed to an eye range ER. The eye range ER is a region assumed as the position of eyes of a driver in the vehicle 100. In the hologram 2 of the present embodiment, the first angle $\theta1$ and the second angle $\theta2$ differ depending on positions along a height direction H. As will be described below, the hologram 2 is formed to condense the diffracted light 30 toward the eye range ER.

When the incident angle of light on the first surface 21 is different from the first angle $\theta1$, the hologram 2 allows the light to pass therethrough. That is, the hologram 2 selectively reflects the light, which is incident at the first angle $\theta1$, toward the eye range ER. Furthermore, the hologram 2 allows light incident on the second surface 22 to pass through toward the eye range ER.

The projection device 3 has a casing 7, an image display device 4, a polarizer 5, a mirror 6, and a cover 8. The casing 7 is disposed inside a dashboard of the vehicle 100, for example. The casing 7 has an opening 7a and is fixed to the vehicle 100 with the opening 7a facing upward. The dashboard is formed with an opening corresponding to the opening 7a of the casing 7. The image display device 4, the polarizer 5, and the mirror 6 are received inside the casing 7. The cover 8 closes the opening 7a of the casing 7. The cover 8 is a transparent member and allows display light 10 to pass therethrough.

The image display device 4 is a device that outputs display light, and for example, is a liquid crystal display device or a laser scanner. The polarizer 5 is an optical system that converts the display light output from the image display device 4 into a P wave. The polarizer 5 is, for example, a polarizing filter that allows the P wave selectively to pass therethrough. The display light output from the image display device 4 is polarized into the display light 10 of the P wave by passing through the polarizer 5.

The mirror 6 is a reflecting device that reflects the display light 10, which is output from the image display device 4 via the polarizer 5, toward the hologram 2. The mirror 6 of the present embodiment is a magnifying mirror. The shape of the reflecting surface of the mirror 6 is a free-form surface and the mirror 6 magnifies the display light 10 of the P wave and reflects the magnified light toward the hologram 2. That is, the projection device 3 projects the display light 10 of the P toward the first surface 21 of the hologram 2.

As illustrated in FIG. 1, the hologram 2 outputs the display light 10, which is incident from the mirror 6, as the diffracted light 30 directed to the eye range ER. When a user views the hologram 2 from the eye range ER, the diffracted light 30 causes a display image 31 to be visually recognized. The diffracted light 30 allows the user to visually recognize the display image 31 as a virtual image. The display image 31 is an image formed in front of the vehicular display device 1 in a vehicle front-rear direction L from the hologram 2.

The hologram 2 of the present embodiment has diffraction characteristics of condensing the diffracted light 30 in the eye range ER. For example, the width WL of the diffracted light 30 directed to the eye range ER becomes narrower from the hologram 2 toward the eye range ER. The width WL is the width of the diffracted light 30 in a height direction H. Note that the hologram 2 may be configured such that the width of the diffracted light 30 in a vehicle width direction also becomes narrower toward the eye range ER. The hologram 2 of the present embodiment can magnify the display image 31 and allow a user to visually recognize the magnified image.

Furthermore, the vehicular display device 1 of the present embodiment can suppress the generation of ghost due to reflected light and improve the visibility of the display image 31 as will be described below. FIG. 3 illustrates reflected light 40 reflected by the windshield 101. FIG. 3 illustrates a virtual display surface 4i instead of the image display device 4. The virtual display surface 4i is a position where the display surface of the image display device 4 is to be disposed when there is no mirror 6. When an image is displayed on the virtual display surface 4i, the image is directly projected on the hologram 2. In other words, the virtual display surface 4i is a position where a virtual image is formed when the mirror 6 is directly viewed from above.

The projection device 3 of the present embodiment is disposed such that at least a part of the display light 10 is reflected by the windshield 101 toward the eye range ER. A part of the display light 10 is reflected by the windshield 101 and becomes the reflected light 40 directed to the eye range ER. When the diffracted light 30 and the reflected light 40 reflected toward the eye range ER are superimposed, the visibility of the display image 31 may be reduced. The reflected light 40 may generate ghost overlapping the display image 31 and reduce the visibility of the display image 31. Note that, in the following description, the reflected light 40 is assumed to indicate reflected light superimposed on the display image 31.

As illustrated in FIG. 4, the reflected light 40 includes first reflected light 40A and second reflected light 40B. The first reflected light 40A is reflected light that is reflected by a surface 11a of the inner glass 11 on a vehicle interior side. The second reflected light 40B is reflected light that is reflected by a boundary surface 12a between the outer glass 12 and the outside of the vehicle. The second reflected light 40B is light in which the display light 10 passes through the surface 11a on the vehicle interior side, is incident on the inner glass 11, passes through the hologram 2, and is reflected by the boundary surface 12a.

The vehicular display device 1 of the present embodiment is configured such that the reflected light 40 becomes less visible by a user. Specifically, the projection device 3 is disposed such that an incident angle $\alpha$ of the display light incident on the inner glass 11 matches with the Brewster angle $\beta$ of the windshield 101, or the incident angle $\alpha$ has a value closer to the Brewster angle $\beta$. The Brewster angle $\beta$ is an angle determined by, for example, a refractive index of the inner glass 11. FIG. 5 illustrates an example of the reflection characteristics of the inner glass 11. In FIG. 5, a horizontal axis denotes the incident angle $\alpha$ [deg] with respect to the inner glass 11 and a vertical axis denotes a refractive index [%] of the inner glass 11. FIG. 5 illustrates a reflection rate $Rs$ for the S wave and a reflection rate $Rp$ for the P wave.

The reflection rate $Rp$ for the P wave is 0 at the Brewster angle $\beta$. Accordingly, when the display light 10 of the P wave is incident on the inner glass 11 at the Brewster angle $\beta$, the reflection rate is 0 or substantially 0. In the vehicular display device 1 of the present embodiment, values of a minimum incident angle $\gamma1$ and a maximum incident angle $\gamma2$ are determined as will be described below. As illustrated in FIG. 3, the minimum incident angle $\gamma1$ is a minimum value of the incident angle $\alpha$ of the display light 10 that generates the reflected light 40. The display light 10 projected from one end P1 of the virtual display surface 4i is reflected toward the eye range ER when the incident angle $\alpha$ is within a predetermined angle range $R\gamma$. The minimum incident angle $\gamma1$ is a minimum value of the angle range $R\gamma$. When the incident angle $\alpha$ is smaller than the minimum incident angle $\gamma1$, the display light 10 at one end P1 is reflected toward a region below the eye range ER.

The display light 10 projected from the other end P2 of the virtual display surface 4i is reflected toward the eye range ER when the incident angle $\alpha$ is within the predetermined angle range $R\gamma$. The maximum incident angle $\gamma2$ is a maximum value of the angle range $R\gamma$. When the incident angle $\alpha$ is larger than the maximum incident angle $\gamma2$, the display light 10 at the other end P2 is reflected toward a region above the eye range ER.

The projection device 3 is disposed such that an angle difference $\delta$ between an incident angle $\alpha x$ ($\gamma1 \leq \alpha x \leq \gamma2$) included in the aforementioned predetermined angle range $R\gamma$ and the Brewster angle $\beta$ is equal to or less than a predetermined value $\delta1$. That is, the projection device 3 is disposed such that the following Equation (1) is satisfied. The projection device 3 is disposed in this manner, so that the following Equation (2) and Equation (3) are satisfied.

$$|\alpha x - \beta| \leq \delta 1 \qquad (1)$$

$$|\gamma 1 - \beta| \leq \delta 1 \qquad (2)$$

$$|\gamma 2 - \beta| \leq \delta 1 \qquad (3)$$

The projection device 3 may be disposed such that, for example, the following Equation (4) is satisfied. That is, the projection device 3 may be disposed such that the Brewster angle $\beta$ is equal to or larger than the minimum incident angle $\gamma1$ and is equal to or smaller than the maximum incident angle $\gamma2$. In other words, the predetermined angle range Ry may include the Brewster angle $\beta$.

$$\gamma 1 \leq \beta \leq \gamma 2 \qquad (4)$$

The predetermined value $\delta1$ is determined, for example, on the basis of an upper limit value $Rx$ of the reflection rate $Rp$ of the P wave illustrated in FIG. 6. The upper limit value $Rx$ is an upper limit value that is allowable as the reflection rate $Rp$ of the P wave on the inner glass 11 from the standpoint of suppressing ghost. An angle range $\alpha0$ is a range of the incident angle $\alpha$ in which the reflection rate $Rp$ of the P wave is equal to or less than the upper limit value $Rx$. The angle range $\alpha0$ is the range of the incident angle $\alpha$ from the minimum value $\alpha1$ to the maximum value $\alpha2$.

In the example illustrated in FIG. 6, a difference between the Brewster angle $\beta$ and the maximum value $\alpha2$ is smaller than a difference between the Brewster angle $\beta$ and the minimum value $\alpha1$. In such a case, the predetermined value $\delta1$ may be determined by the following Equation (5). The predetermined value $\delta1$ is determined as in the following Equation (5), so that the brightness of the reflected light 40 can be set to have a value within an allowable range.

$$\delta 1 = \alpha 2 - \beta \qquad (5)$$

Furthermore, the minimum incident angle $\gamma 1$ and the maximum incident angle $\gamma 2$ may also be determined on the basis of the aforementioned angle range $\alpha 0$. In such a case, the projection device 3 is disposed such that, for example, the predetermined angle range Ry is included in the angle range $\alpha 0$. In other words, the projection device 3 is disposed such that the minimum incident angle $\gamma 1$ is equal to or larger than the minimum value $\alpha 1$ of the angle range $\alpha 0$ and the maximum incident angle $\gamma 2$ is equal to or smaller than the maximum value $\alpha 2$ of the angle range $\alpha 0$.

Furthermore, the projection device 3 of the present embodiment is disposed such that a brightness ratio BI between the brightness BR of the reflected light 40 reflected by the windshield 101 and the brightness BD of the diffracted light 30 is equal to or smaller than a predetermined value BT. The brightness BR of the reflected light 40 is, for example, the total value of the brightness BR1 of the first reflected light 40A and the brightness BR2 of the second reflected light 40B. The brightness BR1 of the first reflected light 40A is expressed by the following Equation (6) and the brightness BR2 of the second reflected light 40B is expressed by the following Equation (7). Note that Wt is the transmittance of the windshield 101, Wr is the surface reflection rate on the windshield 101, Hd is the diffraction efficiency of the hologram 2, and Lt is the brightness of the display light 10 incident on the windshield 101.

$$BR1 = Lt \times Wr \qquad (6)$$

$$BR2 = Lt \times Wr^2 \times Wr \qquad (7)$$

Furthermore, the brightness BD of the diffracted light 30 is expressed by the following Equation (8). The brightness ratio BI is expressed by the following Equation (9).

$$BD = Lt \times Wr^2 \times Hd \qquad (8)$$

$$BI = (BR1 + BR2) / BD \qquad (9)$$

The value of the brightness ratio BI may differ depending on a reflection position on the windshield 101. The projection device 3 is disposed such that, for example, a maximum value of the brightness ratio BI is equal to or smaller than the predetermined value BT. The predetermined value BT is appropriately determined, for example, from the standpoint of improving the visibility of the display image 31. By determining the predetermined value BT to a small value, contrast between the brightness of the display image 31 and the brightness of the reflected light 40 is increased and the reflected light 40 is less conspicuous.

The diffraction efficiency Hd of the hologram 2 and the surface reflection rate Wr of the windshield 101 are determined such that the brightness ratio BI is equal to or smaller than the predetermined value BT or the brightness ratio BI is as small as possible. Note that the surface reflection rate Wr differs depending on the incident angle $\alpha$ of the display light 10 on the windshield 101. Therefore, an optimal arrangement of the projection device 3 is adopted so as to minimize the brightness ratio BI.

As described above, the vehicular display device 1 of the present embodiment has the reflection-type hologram 2 and the projection device 3. The hologram 2 is disposed inside the windshield 101 of the vehicle 100. The hologram 2 has the first surface 21 facing the eye range ER of the vehicle 100. The projection device 3 projects the display light 10 of the P wave toward the first surface 21. The hologram 2 outputs the display light 10, which is incident on the first surface 21 from the projection device 3, as the diffracted light 30 directed to the eye range ER. The hologram 2 has the diffraction characteristics of condensing the diffracted light 30 in the eye range ER.

The projection device 3 is disposed such that a part of the display light 10 is reflected toward the eye range ER when the incident angle $\alpha$ of the display light 10 on the windshield 101 is within the predetermined angle range Ry. The projection device 3 is disposed such that the angle difference $\delta$ between the incident angle $\alpha x$ included in the predetermined angle range R$\gamma$ and the Brewster angle $\beta$ is equal to or smaller than the predetermined value $\delta 1$. The predetermined value $\delta 1$ may be determined such that the reflection rate Rp of the P wave on the surface 11a on the vehicle interior side is equal to or smaller than the upper limit value Rx.

According to the vehicular display device 1 of the present embodiment, although the projection device 3 is disposed in such a positional relation that the reflected light 40 is directed to the eye range ER, the brightness of the reflected light 40 is reduced. By setting the angle difference $\delta$ to be equal to or smaller than the predetermined value $\delta 1$, the reflection rate Rp of the display light 10 of the P wave reflected by the surface 11a on the vehicle interior side is suppressed. As a consequence, both the improvement of the visibility of the display image 31 and the improvement of the degree of freedom in the arrangement of the projection device 3 are achieved.

The projection device 3 of the present embodiment is disposed such that the predetermined angle range R$\gamma$ includes the Brewster angle $\beta$. The predetermined angle range R$\gamma$ includes the Brewster angle $\beta$, so that the reflection rate Rp is reduced and the visibility of the display image 31 is improved.

The projection device 3 of the present embodiment is disposed such that the brightness ratio BI between the brightness BR of the reflected light 40 reflected by the windshield 101 toward the eye range ER and the brightness BD of the diffracted light 30 is equal to or less than the predetermined value BT. With this, the reflected light 40 is less conspicuous than the diffracted light 30, resulting in the improvement of the visibility of the display image 31.

In the present embodiment, the brightness BR of the reflected light 40 includes the brightness BR1 of the first reflected light 40A and the brightness BR2 of the second reflected light 40B. The first reflected light 40A is light reflected by the surface 11a on the vehicle interior side. The second reflected light 40B is light reflected by the boundary surface 12a between the windshield 101 and the outside of the vehicle after passing through the surface 11a on the vehicle interior side. By so doing, the reflected light 40 becomes less visible, resulting in the improvement of the visibility of the display image 31.

Modified example of embodiment

The modified example of the embodiment will be described. The arrangement and characteristics of the hologram 2 are not limited to the arrangement and characteristics illustrated in the aforementioned embodiment. The predetermined angle range Rγ does not necessarily include the Brewster angle β. The predetermined angle range Rγ is appropriately determined such that it is possible to reduce the reflection rate Rp on the windshield 101.

The contents disclosed in the aforementioned embodiment and modified example can be combined and executed as appropriate.

In the vehicular display device according to the present embodiment, the projection device is disposed such that an angle difference between an incident angle included in a predetermined angle range and the Brewster angle is equal to or smaller than the predetermined value. In accordance with the vehicular display device according to the present embodiment, it is possible to improve the visibility of a display image by suppressing the brightness of reflected light and to improve the degree of freedom in the arrangement of the projection device.

**Claims**

1. A vehicular display device comprising:

   a reflection-type hologram (2) disposed inside a windshield (101) of a vehicle (100) and including a first surface (21) facing a side of an eye range (ER) of the vehicle; and
   a projection device (3) that projects display light (10) of a P wave toward the first surface (21), wherein
   the hologram (2) outputs the display light (10), which is incident on the first surface (21) from the projection device (3), as diffracted light (30) directed to the eye range (ER),
   the projection device (3) is disposed such that a part of the display light (10) is reflected toward the eye range (ER) when an incident angle of the display light (10) on the windshield (101) is within a predetermined angle range (Rγ), and
   the projection device (3) is disposed such that an angle difference (δ) between an incident angle (αx) included in the predetermined angle range (Rγ) and a Brewster angle (β) is equal to or less a predetermined value (δ1), **characterized in that** the hologram (2) has diffraction characteristics of condensing the diffracted light (30) in the eye range (ER).

2. The vehicular display device according to claim 1, wherein
   the projection device (3) is disposed such that the predetermined angle range (Rγ) includes the Brewster angle (β).

3. The vehicular display device according to claim 1 or 2, wherein
   the projection device (3) is disposed such that a brightness ratio (BI) between brightness (BR) of reflected light (40) reflected by the windshield (101) toward the eye range (ER) and brightness (BD) of the diffracted light (30) is equal to or less than a predetermined value.

4. The vehicular display device according to claim 3, wherein
   the brightness (BR) of the reflected light (40) includes brightness (BR1) of light reflected by a surface (11a) of the windshield (101) on a vehicle interior side and brightness (BR2) of light reflected by a boundary surface (12a) between the windshield (101) and an outside of the vehicle after passing through the surface on the vehicle interior side.

**Patentansprüche**

1. Fahrzeug-Anzeigevorrichtung, die umfasst:

   ein Reflexions-Hologramm (2), das innerhalb einer Windschutzscheibe (101) eines Fahrzeugs (100) angeordnet ist und eine erste Fläche (21) einschließt, die einer Seite eines Augen-Bereiches (ER) des Fahrzeugs zugewandt ist; sowie eine Projektionsvorrichtung (3), die Anzeigelicht (10) einer P-Welle auf die erste Fläche (21) zu projiziert, wobei
   das Hologramm (2) das Anzeigelicht (10) von der Projektionsvorrichtung (3), das auf der ersten Fläche (21) auftrifft, als Beugungslicht (30) ausgibt, das zu dem Augen-Bereich (ER) gerichtet ist,

die Projektionsvorrichtung (3) so angeordnet ist, dass ein Teil des Anzeigelichtes (10) auf den Augen-Bereich (ER) zu reflektiert wird, wenn ein Auftreffwinkel des Anzeigelichtes (10) auf der Windschutzscheibe (101) innerhalb eines vorgegebenen Winkelbereiches (Ry) liegt, und die Projektionsvorrichtung (3) so angeordnet ist, dass eine Winkeldifferenz (5) zwischen einem Auftreffwinkel (ax), der in dem vorgegebenen Winkelbereich (Ry) eingeschlossen ist, und einem Brewsterwinkel (β) genauso groß ist wie oder kleiner als ein vorgegebener Wert (51), **dadurch gekennzeichnet, dass** die Beugungscharakteristik des Hologramms (2) darin besteht, das Beugungslicht (30) in dem Augenbereich (ER) zu bündeln.

2. Fahrzeug-Anzeigevorrichtung nach Anspruch 1, wobei
die Projektionsvorrichtung (3) so angeordnet ist, dass der vorgegebene Winkelbereich (Ry) den Brewsterwinkel (β) einschließt.

3. Fahrzeug-Anzeigevorrichtung nach Anspruch 1 oder 2, wobei
die Projektionsvorrichtung (3) so angeordnet ist, dass ein Helligkeits-Verhältnis (BI) zwischen Helligkeit (BR) durch die Windschutzscheibe (101) auf den Augenbereich (ER) zu reflektierten Lichtes (40) und Helligkeit (BD) des Beugungslichtes (30) genauso groß ist wie oder kleiner als ein vorgegebener Wert.

4. Fahrzeug-Anzeigevorrichtung nach Anspruch 3, wobei
die Helligkeit (BR) des reflektierten Lichtes (40) Helligkeit (BR1) von Licht, das durch eine Oberfläche (11a) der Windschutzscheibe (101) an einer Fahrzeug-Innenseite reflektiert wird, und Helligkeit (BR2) von Licht einschließt, das durch eine Grenzfläche (12a) zwischen der Windschutzscheibe (101) und einer Außenseite des Fahrzeugs reflektiert wird, nachdem durch die Oberfläche an der Fahrzeug-Innenseite hindurchgetreten ist.

**Revendications**

1. Dispositif d'affichage pour véhicule comprenant :

un hologramme de type réflexion (2) situé à l'intérieur d'un pare-brise (101) d'un véhicule (100) et incluant une première surface (21) faisant face à un côté d'une plage visuelle (ER, *eye range*) du véhicule ; et
un dispositif de projection (3) qui projette une lumière d'affichage (10) d'une onde P en direction de la première surface (21), dans lequel l'hologramme (2) émet en sortie la lumière d'affichage (10), laquelle est projetée de manière incidente sur la première surface (21) depuis le dispositif de projection (3), sous forme de lumière diffractée (30) dirigée vers la plage visuelle (ER),
le dispositif de projection (3) est disposé de façon qu'une partie de la lumière d'affichage (10) soit réfléchie en direction de la plage visuelle (ER) lorsqu'un angle incident de la lumière d'affichage (10) sur le pare-brise (101) est compris dans une plage d'angle ($R_\gamma$) prédéterminée, et
le dispositif de projection (3) est disposé de façon qu'une différence d'angle (δ) entre un angle incident (αx) compris dans la plage d'angle ($R_\gamma$) prédéterminée et un angle de Brewster (β) soit inférieure ou égale à une valeur prédéterminée (δ1), **caractérisé en ce que** l'hologramme (2) a des caractéristiques de diffraction permettant de condenser la lumière diffractée (30) dans la plage visuelle (ER).

2. Dispositif d'affichage pour véhicule selon la revendication 1, dans lequel
le dispositif de projection (3) est disposé de façon que la plage d'angle ($R_\gamma$) prédéterminée inclue l'angle de Brewster (β).

3. Dispositif d'affichage pour véhicule selon la revendication 1 ou 2, dans lequel
le dispositif de projection (3) est disposé de façon qu'un rapport de luminosité (BI, *brightness ratio*) entre la luminosité (BR) de la lumière réfléchie (40) réfléchie par le pare-brise (101) en direction de la plage visuelle (ER) et la luminosité (BD) de la lumière diffractée (30) soit inférieur ou égal à une valeur prédéterminée.

4. Dispositif d'affichage pour véhicule selon la revendication 3, dans lequel
la luminosité (BR) de la lumière réfléchie (40) comprend la luminosité (BR1) de la lumière réfléchie par une surface (11a) du pare-brise (101) sur un côté intérieur du véhicule et la luminosité (BR2) de la lumière réfléchie par une surface limite (12a) entre le pare-brise (101) et un extérieur du véhicule après avoir traversé la surface sur le côté intérieur du véhicule.

# FIG.1

EP 3 789 228 B1

# FIG.2

# FIG.3

EP 3 789 228 B1

# FIG.4

# FIG.5

# FIG.6

**REFERENCES CITED IN THE DESCRIPTION**

**Patent documents cited in the description**

- JP 11091401 A
- JP 2011227281 A